# EUROPEAN PATENT APPLICATION

(11) **EP 1 079 560 A2**
(43) Date of publication of application: **28.02.2001**
(21) Application number: 00202952.8
(22) Date of filing: 23.08.2000
(51) Int. Cl.: H04J 3/07, H04J 3/16

(54) **Synchronous digital communications system**

(30) Priority: 24.08.1999 GB 9919902
(71) Applicant: MARCONI COMMUNICATIONS LIMITED, Coventry, CV3 1HJ (GB)
(72) Inventor: Barker, Andrew James, Attenborough, Nottingham NG9 6BF (GB); Abbas, Ghani Abdul Muttalib, Nottingham NG8 2PX (GB)
(74) Representative: Cockayne, Gillian

(57) **Abstract**

In a synchronous digital communications, convertor means for conversion of traffic between different forms of information structure, each form of information structure comprising a path overhead, whilst preserving the path overhead information. In an embodiment the convertor means comprises means for adding or removing stuff bytes to/from the information structure.

## Description

The present invention relates to the field of synchronous digital communication systems and in particular to the conversion of synchronous digital communications traffic between different information structures.

Current synchronous digital hierarchy (SDH) standards such as ITU specification ITU-T G.707 "Network Node Interface for the Synchronous Digital Hierarchy" define a multiplex structure for various sizes of container and virtual container for transferring data at rates in the range from 1.5 to 140Mbit/s. These standards also define corresponding information structures including administrative units (AU) such as AU-3 and AU-4, tributary units (TU) such as TU-3, tributary unit groups (TUG) such as TUG-3 and Synchronous Transport Modules (STM-N) where N is 1, 4, 16 or 64. Similar entities are defined by corresponding SONET standards such as ANSI T1.105 "Digital Hierarchy- Optical Interface Rates and Formats Specification".

SDH and SONET are similar in principle but use different basic transmission rates. In particular the basic transmission package for SONET is based on a transmission rate of 52 Mega bits per second (Mbit/s) and for SDH a transmission rate of 155Mbit/s. Even though the typical aggregate transmission rates for SONET and SDH are the same (e.g. 2.5Gbit/s) this difference in basic transmission rates results in SONET having a lower granularity administrative unit (i.e. AU-3) as against the SDH administrative unit (AU4) as defined in ITU recommendation G.707. Both SONET and SDH act to map a basic pleisiochronous traffic payload (i.e. according to the pleisiochronous digital hierarchy: PDH) into a synchronous digital structure, e.g. container 3 (C-3). The basic PDH data rates used by SDH and SONET are common to both; in particular 34Mbit/s and 45Mbit/s are used.

SONET and SDH recommendations share some terminology but also have distinct terms. In particular a information structure identical to the SONET SPE is referred to in G.707 as VC-3. In addition to this, first VC-3 information structure G.707 defines a different information structure that is also identified as VC-3. The "SPE-equivalent" VC-3 mentioned first above is defined as being aligned into an AU-3, whereas the second VC-3 aligns into a TU-3. It is important to note that the first "SPE equivalent" VC-3 of G.707 has a different structure to the second "TU-3" VC-3 defined in G.707. For the sake of clarity the "SPE equivalent" VC-3 for aligning to create an AU-3 is referred to below as VC-3_{AU-3} and the further VC-3 for aligning to form a TU-3 is referred to below as VC-3_{TU-3}.

With the increasing globalisation of communications networks there is a growing need to exchange data traffic between SONET and SDH networks. Currently this is achieved by re-mapping the AU-3 information structure down to its constituent PDH datastream and then re-mapping this PDH datastream to form an SDH TU-3 information structure (which may, in turn, be multiplexed into an AU4). In the opposite sense, conversion is achieved by mapping an SDH TU-3 information structure down to its constituent PDH datastream and then re-mapping this PDH datastream to form a SONET AU-3 information structure. The sequences followed to change from a SONET AU-3 information structure to an SDH TU-3 information structure and vice versa are as follows:
(SONET) AU-3 <---> PDH <---> TU-3 (SDH)

However, this scheme has the disadvantage of that the path overhead information contained in the original information structure (e.g. AU-3 or TU-3) is not supported by the PDH data stream and may therefore be lost.

The path overhead provides end to end control providing some or all of the following: path status monitoring, payload type identification, error monitoring, operator communication, protection, tandem connection monitoring and multi-frame phase indication.

The present invention provides a synchronous digital communications system for the transport of data traffic in the form of a first information structure and a second different information structure; in which each form of information structure comprises path overhead information; in which the system comprises convertor means for conversion of traffic between the different forms of information structure whilst preserving the path overhead information; in which the convertor means comprises means for adding or removing stuff bytes.

The present invention also provides a synchronous digital communications system in which the system comprises a plurality of nodes for the communication of traffic there-between, in which the traffic comprises a first form of information structure; in which the plurality of nodes comprise an input node for the input of traffic to the system; in which the input traffic comprises a second form of information structure; in which each form of information structure comprises path overhead information; in which the input node comprises converter means for converting whilst preserving the path overhead information traffic received at the input node in the second form of information structure into the first form of information structure for transport through the system; in which the convertor means comprises means for adding or removing stuff bytes.

The present invention also provides a synchronous digital communications system in which the system comprises a plurality of nodes for the communication of traffic there-between, in which the traffic comprises a first form of information structure; in which the plurality of nodes comprise an output node for the output of traffic from the system; in which the output traffic comprises a second form of information structure; in which each form of information structure comprises path overhead information; in which the output node comprises converter means for converting whilst preserving the path overhead information traffic transported through the system to the output node in the first form of information structure into the second form of information structure for output from the system; in which the convertor means comprises means for adding or removing stuff bytes.

The present invention also providesa method for the conversion of data traffic in a first form of information structure from the first form of information structure into a second form of information structure; in which each form of information structure comprises path overhead information; the method including the steps of adding or removing stuff bytes whilst preserving the path overhead information.

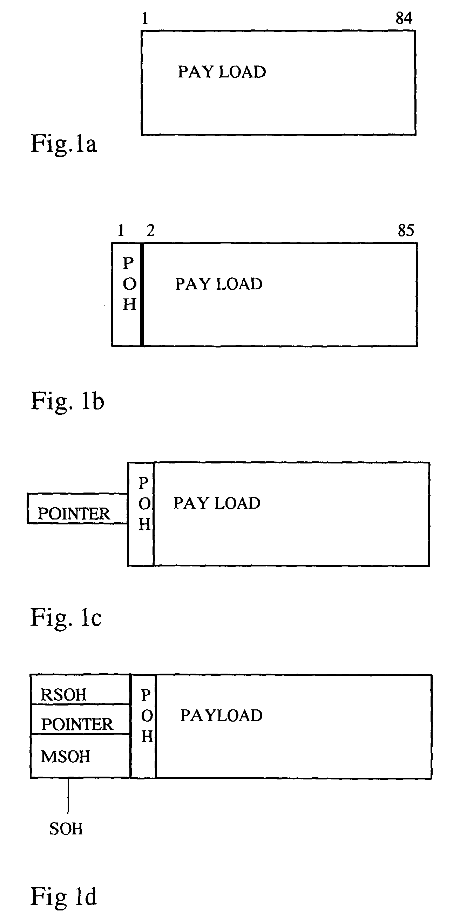

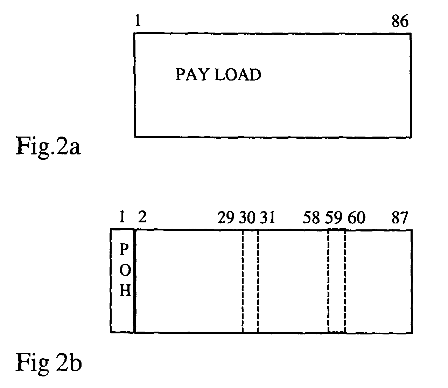

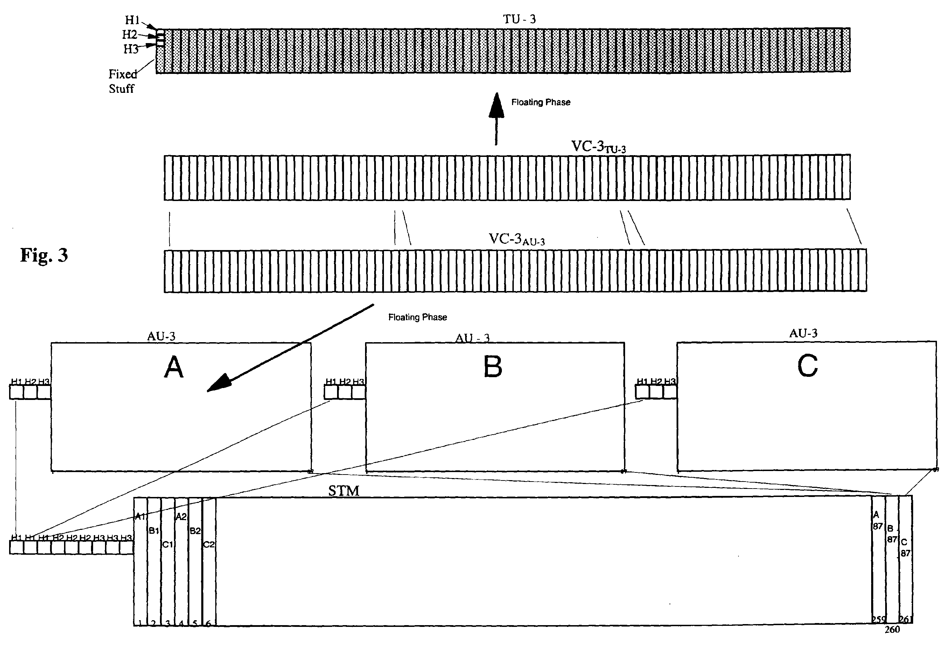

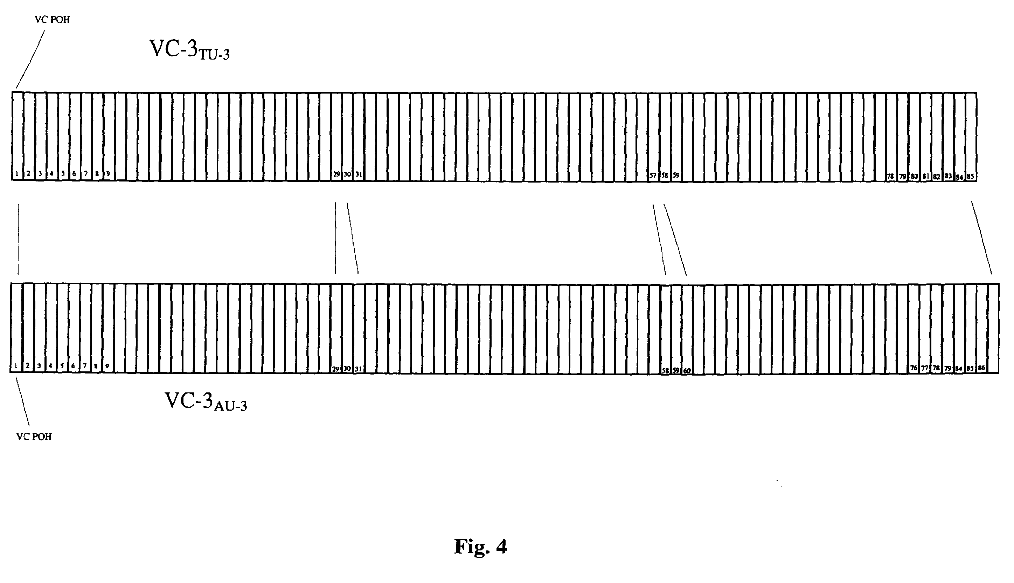

Embodiments of the present invention will now be described by way of illustration with reference to the drawings in which:-
Figures 1 and 2 show details of various information structures according to the prior art;Figures 3 and 4 show conversion between different information structures according to the present invention.

Figure 1 shows a number of SDH information structures as defined in ITU-T G.707. In Figure 1a is shown a container 3 (C-3) comprising a number of bytes (for the avoidance of any doubt, the bytes referred to here have a capacity of 8 bits each) arranged according to convention as 84 columns of 9 rows each. The C-3 provides a seamless payload that is available for the transport of information. In operation, data from a message entering a communications system according to the present invention will be mapped into the payload of one or more such containers.

The term "seamless" is used here to indicate a single entity, i.e. a container, capable of transporting the entire bandwidth as a single, undivided whole. This includes a container carrying a similar, aggregate bandwidth which is divided among a number of smaller bandwidths shared between a number of smaller containers, these smaller containers being multiplexed together but not combined, to make up the aggregate bandwidth.

Figure 1b shows an SDH virtual container 3 (VC-3_{TU-3}). The VC-3_{TU-3} comprises the C-3 of Figure 1a with the addition of a single column of nine path overhead bytes (column 1), making 85 columns in total. The function and makeup of the information contained in the path overhead bytes is as described in ITU-T G.707.

A tributary unit group (TUG-3) (not shown) comprises the VC-3_{TU-3} of Figure 1b in which the virtual container is aligned to the system clock, thus producing a tributary unit (TU) within the TUG to allow synchronisation of the incoming signal to the system clock. In order to locate the position of the start of the first byte of the VC-3_{TU-3}, pointer information is included in an extra column of overhead and added to the VC-3_{TU-3} to form a TU-3. Bytes H1, H2 and H3 are provided in this extra column of overhead for this purpose.

Figure 1c shows an SDH administrative unit AU-4 comprising the virtual container of Figure 1b together with a further pointer in the form of a single row of nine columns shown to the left of the path overhead. The function of the further pointer is to indicate the phase alignment of the virtual container with respect to the synchronous transfer module frame (described below). The form of the pointer is as defined in ITU-T G.707.

Figure 1d shows a STM according to the present invention comprising the AU-4 of Figure 1c together with additional overhead bytes. Regenerator section overhead (RSOH) and multiplex section overhead (MSOH) form, in combination with the AU pointer, the section overhead (SOH) of the STM. The form and function of the RSOH and MSOH are as defined for STM-1 in ITU-T G.707.

Figure 2 shows a number of SONET information structures as defined in ITU-T G.707. In Figure 2a is shown the same container 3 (C-3) as shown in Fig. 1a. This C-3 forming the common plesiochronous information structure for both the SDH and SONET VC-3.

Figure 2b shows a SONET virtual container 3 (VC-3_{AU-3}). The VC-3_{AU-3} comprises the C-3 of Figure 2a with the addition of a single column of nine path overhead bytes (column 1) and two columns of stuff bytes (columns 30 and 59), making 87 columns in total. The function and makeup of the information contained in the path overhead bytes is as described in ITU-T G.707.

Figure 3 shows a number of synchronous digital communications information structures in more detail to illustrate preferred embodiments of the present invention. The information structures are again arranged as a plurality of columns of nine rows each. At the top of the Figure an SDH TU-3 information structure is illustrated as comprising 85 columns of payload (2 to 86) and a single column (1) of header information containing pointer bytes H1, H2, H3 with the remaining rows of column 1 comprising stuff bytes. As indicated above the TU-3 is suitable for multiplexing into a VC-4 for use in an SDH communications network. Immediately below the TU-3 information structure in the Figure is shown an SDH VC-3_{TU-3} information structure, i.e. a information structure suitable for aligning into the TU-3. The VC-3_{TU-3} comprises 84 columns of payload (2 to 85) and a single column (1) of path overhead (VC POH), i.e. without the header column of the TU-3.

Below the VC-3_{TU-3} in the Figure is shown the SONET form of VC-3: the VC-3_{AU-3}. Whilst the information structures shown in the upper half of the Figure and described above are used in SDH communications networks, those information structures shown in the lower half of the Figure and described next are used in SONET communications networks. The VC-3_{AU-3} comprises 86 columns of payload (2 to 87) and a single column of path overhead information (VC-POH) contained in the VC-3_{TU-3}. It will be noted that the VC-3_{AU-3} has two columns of payload in excess of the VC-3_{TU-3}. These two extra columns (30 and 59) are made up of stuff bytes. The structures of the single columns of path overhead associated with the VC-3_{TU3} and VC-3_{AU-3} information structures described above are identical, thus allowing their contents to be preserved unmodified during conversion between these information structures according to a preferred embodiment of the present invention.

Figure 4 shows the two VC-3 information structures in more detail.

Although described above in terms of VC-3, TU-3 and AU-3, the present invention also applies to higher information structures embodying those described and conversion there-between, including VC-4, AU-4, STM-N and OC-N.

Advantageously, the present invention provides a means for efficient conversion between synchronous digital information structures within the synchronous domain, i.e. without converting the payload to plesiochronous form as an intermediate stage. The path overhead is thereby preserved intact and does not need to be re-generated on forming a new TU-3 by conversion from an AU-3 or vice versa.

### SUMMARY

Two major standards exist for defining the format of data traffic in synchronous digital communications networks: SDH and SONET. Each of these standards has its own distinct data formats and there is a growing need for an efficient means of conversion between them. To this end a method of direct conversion between the SONET AU-3 format and the SDH TU-3 format is described in which the respective pointers are relocated and their contents adjusted accordingly and the number of stuff bytes is also adjusted. The method has the advantage of preserving path overhead information that was lost in earlier methods.

## Claims

1. A synchronous digital communications system for the transport of data traffic in the form of a first information structure and a second different information structure; in which each form of information structure comprises path overhead information;
in which the system comprises convertor means for conversion of traffic between the different forms of information structure whilst preserving the path overhead information;
in which the convertor means comprises means for adding or removing stuff bytes.

2. A synchronous digital communications system in which the system comprises a plurality of nodes for the communication of traffic there-between, in which the traffic comprises a first form of information structure; in which the plurality of nodes comprise an input node for the input of traffic to the system; in which the input traffic comprises a second form of information structure;
in which each form of information structure comprises path overhead information;
in which the input node comprises converter means for converting whilst preserving the path overhead information traffic received at the input node in the second form of information structure into the first form of information structure for transport through the system;
in which the convertor means comprises means for adding or removing stuff bytes.

3. A synchronous digital communications system in which the system comprises a plurality of nodes for the communication of traffic there-between, in which the traffic comprises a first form of information structure; in which the plurality of nodes comprise an output node for the output of traffic from the system; in which the output traffic comprises a second form of information structure;
in which each form of information structure comprises path overhead information;
in which the output node comprises converter means for converting whilst preserving the path overhead information traffic transported through the system to the output node in the first form of information structure into the second form of information structure for output from the system;
in which the convertor means comprises means for adding or removing stuff bytes.

4. The communications system as claimed in Claim 2 and Claim 3.

5. The communications system of any above claim in which each form of information structure comprises a pointer; in which the convertor means comprises means for adjusting the location and contents of the pointer whilst preserving the path overhead information.

6. The communications system as claimed in any one of Claims 1-4 in which the first form of information structure is VC-3_{AU-3} and the second form of information structure is VC-3_{TU-3}.

7. The communications system as claimed in Claim 5 in which the first form of information structure is AU-3 and the second form of information structure is TU-3.

8. The communications system as claimed in Claim 6 or 7 in which the converter means comprises means for removing two columns of stuff bytes from the first form of information structure.

9. The communications system as claimed in any one of Claims 1 to 4 in which the first form of information structure is VC-3_{TU-3} and the second form of information structure is VC-3_{AU-3.}

10. The communications system as claimed Claim 5 in which the first form of information structure is TU-3 and the second form of information structure is AU-3.

11. The communications system as claimed in Claims 9 or 10 in which the converter means comprises means for adding two columns of stuff bytes to the first form of information structure.

12. A method for the conversion of data traffic in a first form of information structure from the first form of information structure into a second form of information structure; in which each form of information structure comprises path overhead information; the method including the steps of adding or removing stuff bytes whilst preserving the path overhead information.

13. The method as claimed in Claim 12 in which each form of information structure comprises a pointer; the method including the step of adjusting the contents and the position of the pointer whilst preserving the path overhead information.

14. The method as claimed in any one of Claims 12 and 13 in which the converter means comprises means for removing two columns of stuff bytes from the first form of information structure.

15. The method as claimed in any one of Claims 12 and 13 in which the converter means comprises means for adding two columns of stuff bytes to the first form of information structure.
